# FASCICULE DE BREVET EUROPEEN

(11) **EP 1 599 423 B1**
(45) Date de publication et mention de la délivrance du brevet: **04.06.2008**
(21) Numéro de dépôt: 04714354.0
(22) Date de dépôt: 25.02.2004
(51) Int. Cl.: C03B 5/173, C03B 5/235, C03C 1/10, C03B 18/12, C03C 4/02, C03B 5/16

(54) **PROCEDE ET DISPOSITIF DE PREPARATION D'UN VERRE PAR MELANGE DE VERRES FONDUS**
VERFAHREN UND VORRICHTUNG ZUR HERSTELLUNG VON GLAS DURCH MISCHEN VON GLASSCHMELZEN
METHOD FOR THE PRODUCTION OF GLASS FROM A MIXTURE OF VARIOUS METALS

(30) Priorité: 27.02.2003 FR 0302373
(43) Date de publication de la demande: 30.11.2005
(73) Titulaire: SAINT-GOBAIN GLASS FRANCE, 92400 Courbevoie (FR)
(72) Inventeur: JEANVOINE, Pierre, F-78300 Poissy (FR); GRIJALBA, GOICOECHEA, Luis, E-33408 Aviles (ES); RODRIGUEZ, CUARTAS, Ramon, E-33401 Aviles (ES); LEMAILLE, Maurice, E-33400 AVILES (ES)
(74) Mandataire: Colombier, Christian
(86) Numéro de dépôt international: PCT/FR2004/000420
(87) Numéro de publication internationale: WO 2004/078664

(56) Documents cités:
- EP-A- 0 275 534
- EP-A- 0 527 487
- EP-A- 0 555 552
- WO-A-91/11402
- WO-A-99/37591
- WO-A-03/045859
- DE-A- 2 552 116
- US-A- 3 445 216
- US-A- 3 486 874
- US-A- 4 133 666
- US-A- 5 862 169
- PATENT ABSTRACTS OF JAPAN vol. 0052, no. 00 (C-084), 18 décembre 1981 (1981-12-18) & JP 56 120523 A (SASAKI GLASS KK), 21 septembre 1981 (1981-09-21)

## Description

L'invention concerne un procédé et un dispositif de préparation de verre, avec une forte productivité et un faible temps de transition, pour l'élaboration d'un verre très homogène et sans défauts optiques, notamment du verre plat, par mélange de deux verres liquides de compositions différentes.

La préparation d'un verre à partir de deux verres différents est notamment réalisé pour la préparation de verre coloré. La préparation de verre coloré peut être réalisée de différentes manières. On peut ajouter une fritte de verre solide dans un flux principal de verre, ladite fritte fusionnant et se mélangeant progressivement au verre principal. La fritte est introduite à froid à petite dose dans une cellule de coloration située dans le canal terminal même du four, juste avant l'alimentation des machines de formage. La fritte se présente habituellement sous la forme de morceaux solides et contient l'essentiel du pigment générant la couleur du verre final. Cependant, même en cas d'utilisation de moyens d'homogénéisation (agitateurs), il est très difficile de mélanger efficacement les deux flux de verre, de sorte que le verre final est peu homogène en coloration et ne convient pas pour de nombreuses applications. Généralement, ce type de fabrication est réservé au verre creux (flacons, bouteilles, etc.) ou verre plat imprimé (verre coulé) et plus généralement au verre transformé en articles de faibles dimensions et pour lesquels les exigences d'homogénéité de coloration sont moindres, alors qu'il ne convient pas pour le verre plat de grande dimension. Le US 3627504 enseigne l'ajout de frittes dans un flux de verre en fusion.

Le US 3445216 enseigne la fusion d'une frite de verre au-dessus d'un flux de verre principal, un filet de frite fondu coulant sur ledit flux de verre principal et un chariot se déplaçant transversalement par rapport au flux de verre principal afin de répartir la frite colorée fondue sur la largeur du courant de verre principal.

Le JP-A-56120523 enseigne la préparation séparée de deux verre et leur mélange sous agitation.

Le US 3486874 enseigne la fusion par un four électrique et l'ajout d'un verre coloré à un verre principal destiné à être transformé en verre creux.

Pour préparer un verre plat coloré, on peut également déposer en surface d'un verre clair au moins une couche d'une matière colorée, le verre plat apparaissant coloré n'est pas coloré dans sa masse mais tire sa couleur d'une couche particulière en surface.

Enfin, pour préparer un verre plat coloré, on peut encore introduire les matières colorantes en tête de four avec l'ensemble des matières vitrifiables. Cependant, dans ce type de fabrication, les temps de transition correspondant à un changement de teinte sont toujours très longs en raison principalement du rapport élevé entre masse du verre dans le four/masse du verre tiré par jour (particulièrement sur les fours à verre plat). Plusieurs jours sont souvent nécessaires ce qui est à l'origine d'une perte de verre importante car le verre de transition est impropre à la commercialisation. En particulier, les décolorations (retour d'un verre teinté à un verre clair) sont particulièrement longues. En effet, dans ce cas, on n'a pas le moyen d'accélérer le retour au verre clair, alors que lorsque l'on colore, on peut pratiquer des surcolorations (introduction d'un taux de colorants temporairement supérieur à celui du verre final), ce qui accélère le processus de coloration. Ce problème de temps de transition élevé est plus important pour les teintes absorbantes dans l'infrarouge comme par exemple la couleur verte. En effet, la fabrication des verres absorbants dans l'infrarouge comme les verres verts automobile ou pour la bouteillerie ou le flaconnage entraîne une diminution du transfert de chaleur des flammes vers la sole du four, ce qui abaisse la température du verre au voisinage de cette sole, le rendant ainsi plus visqueux et donc moins mobile. Il en résulte un freinage des courroies de convection et une diminution de la tirée maximum possible. Un verre vert automobile à 0,6% d'oxyde de fer et de redox en Fe²⁺ de 0,30 (le « redox » en Fe²⁺ est le rapport de la quantité d'ions Fe²⁺ sur la quantité totale d'ions du fer) est ainsi fabriqué sur un four de verre flotté (« float ») avec une tirée plus faible d'environ 10 à 15% par rapport à un verre clair contenant seulement 0,1% d'oxyde de fer, et ceci pour le même taux de calcin. De plus, le fort caractère absorbant du verre oblige soit à baisser la tirée, soit à limiter la profondeur de verre à chauffer.

Le problème de temps de transition élevés (ci-dessus exprimé dans un cas de modification de la coloration d'un verre) se pose dans un contexte général de modification de la composition d'un verre et notamment du pouvoir absorbant d'un verre. En effet, dès lors que l'on cherche à modifier la composition d'un verre, notamment en vu de modifier son caractère absorbant vis-à-vis d'au moins certaines longueurs d'ondes par ajout de matière dans un verre principal, on rencontre des difficultés à ce que cette modification soit réalisée de façon bien homogène dans la masse, ce problème étant d'autant plus important que la tirée est importante et que le verre est transformé en articles de grande dimension, notamment en verre plat. Le problème des temps de transition élevés se pose également de façon générale. Par ailleurs, si un composé particulier ou additif de la composition (conférant le cas échéant un pouvoir absorbant) présente un inconvénient comme d'être corrosif vis-à-vis des réfractaires, son ajout en zone d'enfournement des matières vitrifiables d'un gros four se traduit par un impact négatif sur l'ensemble du four de dimension importante. De ce point de vue, l'invention permet notamment d'épargner une masse importante de réfractaires (celle du dispositif principal de grande dimension) en cantonnant la présence de la matière nocive à un dispositif auxiliaire de plus faibles dimensions et à la partie aval du dispositif de fabrication (canal d'alimentation de la station de formage et station de formage, ainsi qu'une éventuelle cellule de mélange). Notamment, on peut être amené à utiliser comme matière première des matières contenant des métaux (par exemple des calcins polués ou moins bien triés, comme des tessons de bouteilles polués par un métal de la capsule métallique), ces derniers pouvant avoir tendance à s'accumuler sur la sôle du four et infiltrer les joints des réfractaires, ce qui peut les endommager voire les percer. En cantonnant ces matières nocives au dispositif auxiliaire de plus faible dimension, on a globalement une plus faible usure de réfractaires.

De même, si la fusion de certains composés particuliers (ou additifs) requiert des températures trop élevées pour le four principal, on pourra préférer les introduire dans le verre final par le biais du dispositif auxiliaire, surtout lorsque celui-ci est équipé de brûleurs immergés au haut pouvoir calorifique.

L'invention résout les problèmes sus-mentionnés. Selon l'invention, les temps de transition pour changement de composition sont réduits, et par ailleurs, de fortes tirées de verre, même pendant la production des verres absorbants dans l'infrarouge (notamment verre vert contenant de l'oxyde de fer, généralement mélange d'oxyde ferreux et d'oxyde ferrique), sont rendues possibles. En effet, selon la fusion classique de l'art antérieur, si le pigment absorbant dans l'infrarouge est introduit en zone d'enfournement (en tête de four) comme les autres matières vitrifiables, les brûleurs atmosphériques auront beaucoup de mal à chauffer dans les profondeurs du verre liquide (du fait de l'absorption par le verre lui-même), de sorte que l'on est obligé soit de baisser la tirée, soit de prévoir de faibles hauteurs de verre liquide. Selon l'invention, l'élément absorbant peut être principalement amené dans le verre final par un four auxiliaire à plus faible tirée que le four principal, ce dernier pouvant alors conserver de fortes tirées et de fortes profondeurs de verre. Ainsi, le four principal peut conserver une forte tirée spécifique, pouvant aller de 1,4 à 2 t/j.m² et fonctionner avec une forte profondeur de verre fondu, pouvant être supérieure à 1 mètre, dès lors que l'élément absorbant dans l'infrarouge comme l'oxyde de fer est apporté par le verre auxiliaire. Le four auxiliaire est avantageusement du type à brûleurs immergés car un tel four a une tirée spécifique élevée pour un volume faible, ce qui contribue encore à réduire les temps de transition. Cet avantage est particulièrement important si l'on compare avec un four électrique. De plus, les électrodes d'un tel four électrique (généralement en Mo) s'usent rapidement en présence d'un verre auxiliaire fortement chargé en fer, comme c'est notamment le cas dans le cadre de la présente invention.

Dans le cadre de la présente demande, la modification du verre principal est réalisée par ajout d'un verre auxiliaire, le mélange de ces deux verres étant appelé verre final. Ainsi, l'invention concerne un dispositif et un procédé de fabrication d'un verre final homogène comprenant la préparation d'un verre principal liquide par un dispositif principal comprenant un four principal générant un flux principal de verre (dit « verre principal »), la préparation d'un verre auxiliaire liquide par un dispositif auxiliaire comprenant un four auxiliaire comprenant au moins un brûleur immergé, générant un flux auxiliaire de verre (dit « verre auxiliaire »), le dispositif auxiliaire comprenant un affineur situé après le four auxiliaire, le flux auxiliaire étant plus faible que le flux principal, le verre auxiliaire étant de composition différente de celle du verre principal en ce qui concerne la teneur en au moins un composé conférant un caractère absorbant au verre final, les deux flux étant ensuite mélangés en un seul flux total du verre final. La composition du verre final est différente de celle du verre principal car elle a été modifiée par l'ajout du verre auxiliaire. Du fait de cette modification, le caractère absorbant du verre final est différent de celui du verre principal.

Le verre auxiliaire est de composition différente de celle du verre principal en ce qui concerne au moins un composé (pouvant également être appelé « composé particulier » dans la présente demande). Ainsi l'invention se rapporte à la modification de la teneur en au moins un composé (ou additif) dans le verre principal, ladite modification conduisant au verre final.

Le verre auxiliaire peut avoir pour fonction de faire augmenter la teneur en un composé particulier du verre principal auquel cas la teneur en ledit composé est plus importante dans le verre auxiliaire que dans le verre final et la teneur en ledit composé est plus importante dans le verre final que dans le verre principal. Notamment, le verre auxiliaire peut être un verre colorant devant colorer le verre principal. Dans cette situation ou l'on cherche à faire augmenter la teneur en un composé du verre principal au verre final, et pour réduire encore les temps de transition entre deux campagnes de fabrications utilisant le même verre principal, on peut surdoser momentanément la teneur en composé concerné dans le verre auxiliaire au début de la deuxième campagne de fabrication pour que la teneur en ledit composé dans le verre final soit plus rapidement atteinte. On procède ensuite à une baisse contrôlée dudit composé dans le verre auxiliaire pour conserver la teneur souhaitée en ledit composé dans le verre final.

Le verre auxiliaire peut avoir pour fonction de faire baisser la teneur en un composé particulier du verre principal auquel cas la teneur en ledit composé est plus importante dans le verre principal que dans le verre final et la teneur en ledit composé est plus importante dans le verre final que dans le verre auxiliaire. Notamment, le verre principal peut être un verre déjà coloré que l'on cherche à décolorer en lui ajoutant un verre auxiliaire clair.

Le flux total alimente généralement une station de formage du verre pour faire du verre creux ou du verre plat. La station de formage peut donc notamment être une station de formage en continu de verre plat comme une installation de verre flotté (float glass). Dans une telle installation, un verre plat est produit en continu en un ruban de grande largeur, supérieure à 1 mètre, généralement supérieure à 2 mètres et plus généralement supérieure à 3 mètres. De préférence, au moment de leur mélange, les deux verres liquides (fondus) ont des températures voisines, c'est-à-dire ne s'écartant pas l'une de l'autre de plus de 100°C, et aussi des viscosités voisines. Généralement , les deux flux ont des températures comprises entre 1100 et 1300°C et même entre 1100 et 1200°C.

Le verre final contient un composé lui conférant un caractère absorbant, et il peut également être appelé verre absorbant.

L'invention se rapporte notamment à la modification du caractère absorbant d'un verre principal, soit sa diminution, soit son augmentation, étant entendu que la diminution s'accompagne d'une baisse de teneur en un composé particulier et l'augmentation s'accompagne d'une augmentation de teneur en ledit composé.

Le verre auxiliaire peut notamment modifier le pouvoir absorbant du verre principal. Sont concernés tous les pouvoirs absorbants vis-à-vis de radiations, c'est-à-dire vis-à-vis de longueurs d'ondes dans le visible, ou dans les UV, ou dans les infra-rouges, ou vis-à-vis des rayons X ou vis-à-vis des rayons alpha, ou bêta ou gamma, ou vis-à-vis de longueurs d'ondes dans au moins deux de ces domaines.

Si l'on cherche à faire augmenter le caractère absorbant du verre principal, on utilise un verre auxiliaire plus absorbant que lui, de sorte que le verre final présente un caractère absorbant inférieur à celui du verre auxiliaire mais supérieur à celui du verre principal. Cet ordre dans le caractère absorbant des trois verres se retrouve dans leurs teneurs respectives en composé à l'origine du caractère absorbant considéré. Ainsi, le procédé selon l'invention peut notamment être un procédé de coloration d'un verre dont on fait augmenter la teneur en un certain pigment quand on passe du verre principal au verre final.

Si l'on cherche à faire baisser le caractère absorbant du verre principal, on utilise un verre auxiliaire moins absorbant que lui, de sorte que le verre final présente un caractère absorbant supérieur à celui du verre auxiliaire mais inférieur à celui du verre principal. Cet ordre dans le caractère absorbant des trois verres se retrouve dans leurs teneurs respectives en composé à l'origine du caractère absorbant considéré. Ainsi, le procédé selon l'invention peut notamment être un procédé de décoloration d'un verre dont on fait baisser la teneur en un certain pigment quand on passe du verre principal au verre final. Cette possibilité présente notamment l'intérêt suivant : si un four principal fabrique un verre principal contenant une fort teneur en un composé (par exemple 2% en poids d'oxyde de fer) et que l'on a besoin ponctuellement d'un verre final avec une plus faible proportion en ledit composé (par exemple verre final à 1% en poids d'oxyde de fer), on peut facilement fabriquer ce verre par ajout au verre principal d'un verre auxiliaire contenant encore moins dudit composé (par exemple 0% d'oxyde de fer), sans interrompre ou perturber le fonctionnement du four principal. Lorsque le volume souhaité est réalisé, on arrête l'ajout du verre auxiliaire et ainsi on reprend la fabrication précédente, encore une fois sans perturber le fonctionnement du four principal.

Comme pour l'utilisation de frittes de verre selon l'art antérieur (dans un contexte de coloration), on modifie la composition d'un verre (et le cas échéant son pouvoir absorbant) non plus à partir de la matière première enfournée dans le four de fusion, mais dans la zone terminale du four. Cependant, dans le cadre de la présente invention,
- on n'utilise plus une fritte mais un verre auxiliaire de matrice (composition chimique hors éléments particuliers comme les additifs ou composés particuliers) identique ou voisine de celle du verre final à fabriquer,
- le verre auxiliaire est introduit chaud et fondu dans le verre principal,
- le verre auxiliaire est élaboré sur une installation séparée, à coté du four principal et le cas échéant à proximité de la cellule de mélange. Notamment, le dispositif de préparation du verre auxiliaire peut être de petite dimension, surtout lorsqu'il fait appel à la technologie des brûleurs immergés, ce qui permet généralement de l'ajouter à côté du dispositif principal sans modification de l'infrastructure générale.

De plus, même dans le cadre d'une coloration, l'utilisation de pigments colorants comme un oxyde colorant est moins onéreuse que l'utilisation de frittes.

Le four principal est généralement principalement chauffé par au moins un brûleur atmosphérique (parfois également appelé brûleur aérien, ce type de brûleur n'étant pas immergé), ce qui signifie qu'au moins la moitié de l'énergie thermique apportée dans ce four l'est par au moins un brûleur atmosphérique. Le cas échéant, le four principal peut être tel que son moyen de chauffage est exclusivement constitué de brûleurs atmosphériques.

Le four principal est un four de fusion comprenant généralement une zone de fusion et une zone d'affinage située après la zone de fusion. Ce four principal présente généralement une surface au sol allant de 200 à 600 m², notamment entre 300 et 500 m². Le cas échéant, ce four de fusion peut être suivi d'une braise (« conditionning zone » ou « working end » en anglais) pour le conditionnement thermique dont la surface au sol peut par exemple aller de 50 à 300 m², selon l'importance de l'installation. Le dispositif principal, qui peut comprendre un four principal suivi d'une braise, peut présenter une surface au sol allant de 250 à 900 m².

Le four auxiliaire générant le verre auxiliaire comprend au moins un brûleur immergé. Ce four auxiliaire est de préférence principalement chauffé par au moins un brûleur immergé, ce qui signifie qu'au moins une partie, notamment au moins la moitié, de l'énergie thermique apportée dans ce four l'est par au moins un brûleur immergé. Le four auxiliaire peut être tel que son moyen de chauffage peut n'être constitué que de brûleurs immergés. En effet, le choix de la technologie de la combustion immergée est avantageuse d'abord à cause de sa tirée spécifique pouvant être élevée (pouvant par exemple dépasser 15 t/j.m² en calcin verre sodocalcique), par exemple pouvant aller de 5 à 20 t/j.m², ce qui entraîne un temps de transition (pour passer d'une fabrication à l'autre, par exemple d'une couleur à une autre) faible car on diminue alors beaucoup le rapport massique verre résident dans le four / verre tiré: ceci est avantageux car c'est le temps de transition du four auxiliaire qui détermine en fait le temps de transition global du dispositif entier. Cette technologie des brûleurs immergés est également avantageuse dans le cadre de l'invention par l'effet de puissant mélangeur que possède la technologie de combustion immergée, ce qui conduit à une meilleure homogénéité du verre auxiliaire.

Par suite du transfert de chaleur très convectif assuré par le brassage du brûleur immergé, il n'y a pas de difficulté particulière à fondre des verres très absorbants de l'infrarouge, ce qui est particulièrement recherché puisque les verres colorants sont généralement riches en colorants comme l'oxyde de fer. En effet, si le moyen de chauffage est surtout radiatif (cas des brûleurs atmosphériques et électrodes immergés), de forts gradients de température dans la masse du verre en fusion peuvent être observés, ce qui nuit à son homogénéité.

Enfin la conception d'un four à brûleurs immergés est simple car elle implique de faibles surfaces et pas de superstructure très chaude. A titre d'exemple, un four à combustion immergée fondant du calcin sodocalcique à une tirée de 100t/j peut avoir une surface non supérieure à 6 m².

Le four auxiliaire est un four de fusion et présente généralement une surface au sol allant de 1 à 50 m², pouvant donc être inférieure à 6 m². Avant mélange des deux flux de verre, le verre auxiliaire est affiné dans une cellule d'affinage (ou « affineur »). L'affineur peut avoir une surface au sol allant de 1 à 50 m². Ainsi le dispositif auxiliaire qui comprend un four auxiliaire suivi d'un affineur , peut présenter une surface au sol allant de 2 à 100 m².

Un procédé d'affinage particulièrement adapté pour faire suite à un four comprenant au moins un brûleur immergé est l'affinage sous pression réduite tel que décrit dans le WO99/35099. Le système d'affinage comportant le minimum de verre résident est le meilleur, toujours pour réduire le temps de transition. L'affinage sous pression réduite, statique ou comportant un organe dynamique en rotation, est préféré.

Le verre auxiliaire peut se déverser dans le canal conduisant le flux principal vers la station de formage. Le cas échéant, le verre auxiliaire et le verre principal peuvent tous deux se déverser dans une cellule de mélange (que l'on peut également appeler cellule de coloration lorsque la modification de composition correspond à une modification de couleur) placée avant la station de formage. Dans tous les cas le mélange des deux verres au sein du verre final est homogénéisé à l'aide d'agitateurs, avant que le verre n'atteigne la station de formage.

La cellule de mélange peut être un compartiment de forme approximativement carrée ou rectangulaire (vu de dessus) et est équipée d'agitateurs suffisamment puissants pour homogénéiser efficacement. La dimension de cette cellule et le nombre des agitateurs dépendent de la tirée. Sa température de fonctionnement va généralement de 1100°C à 1300°C, notamment autour de 1200°C.

Les agitateurs (pouvant être dans l'éventuelle cellule de mélange) peuvent notamment être verticaux et comporter plusieurs niveaux de pales inclinées, en sens inverses d'un agitateur à l'autre pour réaliser un mélange à la fois vertical et horizontal. Ces agitateurs peuvent par exemple être réalisés en platine rhodié, en alliage métallique réfractaire ou en céramique structurale (alumine, zircone mullite, mullite, etc). Dans ces deux derniers cas on procède à un dépôt plasma de platine pour assurer l'inertie au contact du verre, après dépôt de couches barrière appropriées.

Le verre auxiliaire fondu est introduit dans le verre principal de manière à éviter de former des bulles.

Le verre final, obtenu après mélange du verre principal et du verre auxiliaire, doit être homogène (notamment en teinte), pour satisfaire le cahier des charges des produits visés, ledit cahier des charges étant particulièrement exigeant dans le cas du verre plat pour le bâtiment ou l'automobile.

Le verre auxiliaire représente généralement au plus 20% , en particulier 0,5 à 20 % et plus généralement 1 à 15 % et même 2 à 10 % de la masse du verre final.

Pour conserver la qualité de pâte du verre final et en particulier assurer un faible taux de bulles, il est préférable de s'assurer de la cohérence des deux verres à mélanger sur le plan de l'oxydo réduction : ainsi, si l'on appelle « redox » d'un ion d'un métal le rapport de la quantité (molaire ou massique) de cet ion sur la quantité totale du même métal, on préfère que pour un métal donné, les redox des différents ions d'une part dans le verre principal et d'autre part dans le verre auxiliaire ne présentent pas une différence supérieure à 0,1. A titre d'exemple, en ce qui concerne le métal fer, si le redox de l'ion Fe²⁺ dans le verre principal est de 0,2 , on préfère que le redox de l'ion Fe²⁺ dans le verre auxiliaire soit de 0,2 ± 0,1.

On préfère que le mélange des deux verres soit effectué alors qu'ils ont sensiblement la même température, c'est-à-dire que la différence de leur température est au plus de 100°C. Généralement, au moment de leur mélange, le verre auxiliaire et le verre principal présentent tous deux une température allant de 1100 à 1300°C et même entre 1100 et 1200°C.

Ce soucis de correspondance entre les deux verres sur le plan de la température et du redox vient du fait que de trop fortes différences peuvent être à l'origine d'une nouvelle formation de bulles dès leur mélange.

Le four auxiliaire comprend au moins un brûleur immergé, un avantage du brûleur immergé étant de faire baisser le taux de sulfate (généralement exprimé en % de SO₃) dans le verre auxiliaire. En effet, l'eau produit par les gaz de combustion, lesquels brassent efficacement le verre auxiliaire, débarrassent quasi-totalement le verre auxiliaire du sulfate. Ainsi, le verre auxiliaire ne peux pas être source de bulles provenant d'un dégagement gazeux de SO₂. On peut se servir du verre auxiliaire pour influencer le redox du verre final. En effet, la limite de solubilité du sulfate dans un verre peut être représentée par une courbe décroissante lorsque le redox (en particulier celui de Fe²⁺) augmente. Ainsi, on a généralement tendance à générer des bulles indésirables de SO₂ lorsqu'on augmente le redox. C'est pourquoi il n'est généralement pas évident de mélanger deux verres au redox différent. L'usage d'un four à brûleurs immergés pour réaliser le verre auxiliaire apporte une solution à ce problème. En effet, comme le verre auxiliaire est débarrassé de son sulfate, l'apport du verre auxiliaire, revient à diluer en quelque sorte le sulfate présent dans le verre principal et donc à s'éloigner de la limite de solubilité. Le risque de formation de bulles est donc diminué. Cela donne de la flexibilité au procédé car l'on peut profiter de cette dilution pour augmenter un peu le redox du verre final en préparant un verre auxiliaire au redox un peu plus élevé. Surtout, la technologie des brûleurs immergés permet de baisser la température de préparation du verre auxiliaire si l'on compare avec une autre technologie de chauffe comme le chauffage électrique. Ceci est avantageux car cela permet de se rapprocher beaucoup plus rapidement de la température de mélange des deux verres, avantageusement plus basse que la température de préparation des deux verres à mélanger. En effet, on s'écarte encore de la limite de solubilité du sulfate en baissant la température. Ainsi, le procédé selon l'invention utilisant la technique des brûleurs immergés pour le four auxiliaire permet de réaliser un verre coloré par l'oxyde de fer allant du vert jusqu'au bleu, grâce à la possibilité de faire varier le redox du Fe²⁺ dans un très large domaine.

Ainsi, l'invention concerne notamment le procédé selon lequel
- le four auxiliaire débarrasse quasi-totalement le verre auxiliaire des sulfates présents dans les matières premières l'alimentant,
- le verre auxiliaire présente une teneur en fer plus élevée que celle du verre principal et un redox en Fe²⁺ plus élevé que celui du verre principal.

L'invention concerne notamment le procédé selon lequel le verre auxiliaire présente une teneur quasi-nulle en sulfate, le verre principal présente une teneur en sulfate allant de 0,2 à 0,35 %, exprimé en % en poids de SO₃, le verre auxiliaire présente un redox en Fe²⁺ plus élevé que le verre principal et une teneur en fer plus élevée que le verre principal.

A titre d'exemple, on peut préparer un verre principal dans un four à brûleurs aériens, aux caractéristiques suivantes :
- 0,24% de SO₃,
- redox Fe²⁺ : 0,23
- teneur en Fe : 900 ppm en poids,
- température de préparation : 1450°C,
- pourcentage du verre final : 90%
et un verre auxiliaire dans un four à brûleur immergé aux caractéristiques suivantes :
- 0% de SO₃,
- redox Fe²⁺ : 0,36,
- teneur en Fe : 4,3% en poids,
- température de préparation : 1200°C,
- pourcentage du verre final : 10%

Ces deux verres sont mélangés à 1150°C pour produire un verre final aux caractéristiques suivantes :
- 0,22% de SO₃,
- redox Fe²⁺ : 0,34,
- teneur en Fe: 0,51 % en poids.

On ne sait actuellement pas réaliser un verre au redox aussi élevé dans un four classique à brûleurs aériens, en raison de la difficulté à contrôler le redox.

Le four de préparation du verre principal est généralement alimenté en matières vitrifiables classiques se présentant sous forme de poudre, et le cas échéant partiellement en calcin. La quantité de calcin représente généralement 5 à 25 % de la masse des matières premières alimentant le four principal.

Le four de préparation du verre auxiliaire peut être alimenté de plusieurs manières :
- soit en calcin, par exemple de retour ligne (c'est-à-dire provenant de découpe ou casse de verre en aval du même dispositif),
- soit en composition vitrifiable classique se présentant généralement sous forme de poudre,
- soit en verre fondu provenant d'un prélèvement effectué en amont sur le flux de verre principal
- soit en fritte de coloration, notamment lorsque l'on cherche à colorer par l'oxyde de chrome
ou par une combinaison d'au moins deux de ces moyens.

Pour alimenter le four auxiliaire, dans certains cas (par exemple dans les cas ou on n'est pas tenu de recycler le calcin de retour ligne) on pourra trouver avantage à un prélèvement du verre principal en amont du point de mélange des deux flux, par exemple dans une braise suivant le four principal. L'énergie à apporter dans le four auxiliaire est alors considérablement réduite.

Les colorants (ou pigment) pouvant être utilisés en tant que composé particulier en concentration différente dans le verre principal et le verre auxiliaire dans le cadre de la présente invention sont en général des oxydes très fusibles (ceux du fer, du cobalt, du nickel...). Pour le cas ou le verre final devrait contenir un oxyde de chrome, celui pourrait être introduit dans le four auxiliaire sous forme de fritte de façon à minimiser les risques de présence d'infondus dans le verre final. L'oxyde de chrome est généralement utilisé seul pour donner une coloration verte ou jaune au verre, ou alors il est présent en addition à de l'oxyde de cobalt dans le cadre d'un verre bleu.

Le four de fusion du verre auxiliaire comporte avantageusement un système de récupération de chaleur visant à réchauffer par les fumées qu'il génère, les matières premières (comme le calcin) avec lesquelles on l'alimente (circulation à contre courant des fumées par rapport aux matières premières introduites). On économise ainsi de l'énergie ce qui est avantageux notamment lorsque le four fonctionne au gaz combustible et à l'oxygène pur, système le plus simple pour la combustion immergée.

Le procédé et dispositif selon l'invention comprend généralement en aval du point de mélange des deux verres, le cas échéant dans une cellule de mélange, une station de formage, laquelle peut être un four de verre flotté, une station de laminage ou une station de formage de verre creux.

Le verre principal comprend généralement au moins 55% en poids de silice (SiO₂). Le verre principal comprend généralement moins de 5% en poids d'alumine.

Le verre principal comprend généralement :
- 65 à 75 % en poids de SiO₂,
- 10 à 15% en poids de Na₂O
- 7 à 11 % en poids de CaO (rôle de fluidifiant à la fusion),

Le verre principal peut en plus également comprendre
- 0 à 5 % en poids de B₂O₃,
- 0 à 5 % en poids MgO,
- 0 à 2% en poids d'alumine,
- 0 à 2% en poids d'oxyde de fer,
- 0 à 200 ppm en poids de sélénium (sous sa forme métallique),
- 0 à 500 ppm en poids d'oxyde de cobalt,
- 0 à 1000 ppm en poids d'oxyde de chrome,
- 0 à 1000 ppm en poids d'oxyde de cuivre,
- 0 à 2000 ppm en poids d'oxyde de nickel,
- 0 à 1% en poids d'oxyde de tungstène,
- 0 à 2% en poids d'oxyde de cérium,
- 0 à 2% en poids d'oxyde de titane,
- 0à 2500 ppm d'oxyde d'uranium.

Le verre auxiliaire comprend généralement au moins 50% et même au moins 55% en poids de SiO₂. Le verre auxiliaire comprend généralement moins de 5% en poids d'alumine.

Le verre auxiliaire comprend généralement :
- 50 à 75 % en poids de SiO₂,
- 8 à 15 % en poids de Na₂O
- 0 à 5 % en poids de B₂O₃
- 0 à 2 % en poids d'alumine.

Le composé en teneur différente dans le verre principal et le verre auxiliaire peut être un pigment, lequel pouvant par exemple être au moins l'un des suivant :
- oxyde d'un métal (autre que Si, Na B et Al) comme le fer, le chrome, le cobalt, le cuivre, le nickel, le zirconium, le titane, le manganèse, le praséodyme, le zinc, le cérium, le néodyme, l'erbium, le vanadium, le tungstène,
- le sélénium (dans sa forme métallique).

Le cas échéant, le composé en teneur différente dans le verre principal et le verre auxiliaire peut être l'oxyde de plomb, même en quantité très importante (par exemple 30% en poids). En effet, l'oxyde de plomb dans un verre peut servir à absorber les rayons X. Comme cet oxyde est particulièrement corrosif vis-à-vis des réfractaires, il est particulièrement avantageux de l'introduire dans le verre final par le biais du dispositif auxiliaire, car ainsi, sa nocivité s'exercera vis-à-vis du dispositif auxiliaire, plus petit, et épargnera le dispositif principal. Ainsi, on usera moins de réfractaires. Bien entendu, il n'est pas exclu que le verre principal contienne également de l'oxyde de plomb.

Le cas échéant, le composé particulier est généralement présent dans le verre auxiliaire en une teneur allant de 20 ppm en poids à 30% en poids. Selon l'invention, le composé en teneur différente dans le verre principal et le verre auxiliaire peut être un oxyde d'un métal autre que Si, Na, B et Al. Cet oxyde peut être à l'origine d'une coloration du verre auxiliaire visible à l'oeil nu, ledit oxyde étant présent dans le verre auxiliaire en une teneur supérieure à celle du même oxyde dans le verre principal (le verre principal peut donc ne pas contenir cet oxyde). Ainsi, le composé particulier peut être un pigment présent dans le verre auxiliaire en une teneur plus importante à la teneur du même pigment dans le verre principal et en une teneur suffisante pour conférer une coloration visible à l'oeil nu au verre final.

Tout composé particulier dans le verre auxiliaire ou le verre principal ou le verre final y est présent en une teneur inférieure à sa limite de solubilité dans ledit verre, ladite limite pouvant dépendre de la composition dudit verre.

Ainsi, notamment lorsqu'il joue le rôle d'augmenter un caractère absorbant, le verre auxiliaire peut généralement comprendre au moins l'un des éléments suivant dans les quantités mentionnées :
- 0 à 30% et plus particulièrement 0,5 à 20% en poids d'oxyde de fer,
- 0 à 1,5% et plus particulièrement 20 ppm à 1% en poids de sélénium,
- 0 à 2% et plus particulièrement 20 ppm à 2% en poids d'oxyde de cobalt,
- 0 à 2% et plus particulièrement 20 ppm à 2% en poids d'oxyde de chrome,
- 0 à 5% et plus particulièrement 50 ppm à 5% en poids d'oxyde de nickel,
- 0 à 15% et plus particulièrement 0,5% à 10% en poids d'oxyde de cérium,

Lorsqu'il joue le rôle d'augmenter un caractère absorbant grâce à un composé particulier, le verre auxiliaire contient au moins ledit composé en quantité supérieure par rapport au verre principal (qui peut donc ne pas contenir ledit composé), de façon à faire augmenter la teneur en ce composé dans le verre final par rapport au verre principal. Notamment, le verre auxiliaire peut contenir de l'oxyde de fer en quantité suffisante pour conférer à l'oeil nu de la coloration verte au verre final. S'il s'agit de conférer de la couleur verte au verre final grâce à l'oxyde de fer contenu dans le verre auxiliaire, ceci signifie notamment que si le verre principal contient déjà de l'oxyde de fer, le verre auxiliaire en contient plus (teneur supérieure) de façon à ce que le verre final présente à l'oeil nu une coloration verte plus prononcée que le verre principal.

Le verre principal peut comprendre au moins un ion d'un métal autre que Si, Na, B et Al, ledit ion étant également contenu dans le verre auxiliaire, la différence de redox de cet ion entre d'une part le verre principal et d'autre part le verre auxiliaire, n'étant pas supérieur à 0,1.

Entre le verre principal et le verre auxiliaire, il existe une différence en la teneur en au moins un composé. Cette différence de teneur est généralement d'au moins 10% de la teneur (en % en poids) la plus forte entre ces deux verres et elle peut aller jusqu'à 100%. Ainsi, à titre d'exemple, si un composé particulier est présent à raison de 0% dans l'un de ces deux verres et à raison de 20% dans l'autre, la différence de teneur est de 20 - 0 = 20 soit 100% de la teneur la plus forte.

Notamment, l'invention concerne un verre plat comprenant de l'oxyde de fer lui conférant une coloration verte de façon homogène dans son épaisseur ainsi qu'un verre plat comprenant de l'oxyde de fer lui conférant une coloration bleu de façon homogène dans son épaisseur (dans la masse). Par une installation de flottage sur un bain de métal fondu, ce verre peut être produit en ruban de plus de 2 m de largeur.

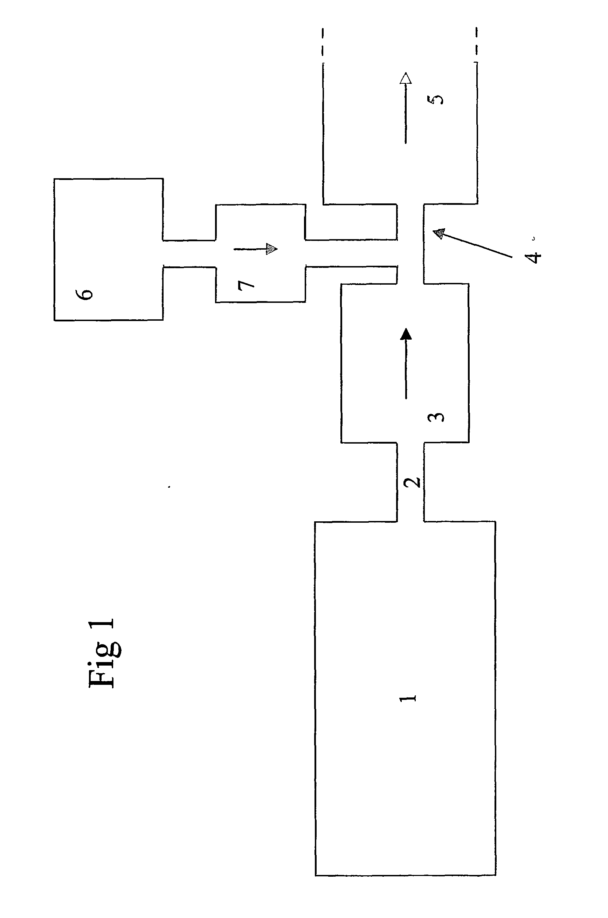

La figure 1 décrit très schématiquement un mode de réalisation de l'invention. L'enfournement des matières premières n'y est pas représenté. Le dispositif principal comprend un four 1 et une braise 3. Le four 1 à brûleurs atmosphériques alimenté en matières vitrifiables sous forme de poudre et/ou calcin produit un verre principal s'écoulant au travers du corset 2 dans la braise 3 (pour le conditionnement thermique) ledit verre principal alimentant au travers du canal 4 une station de formage 5 de verre flotté pour produire du verre plat. Le canal 4 reçoit un verre auxiliaire produit dans un four 6 à brûleurs immergés dont le verre est affiné en 7. Le dispositif auxiliaire comprend le four 6 et l'affineur 7. Les deux verres (principal et coloré) sont mélangés dans le canal 4 muni de moyens d'homogénéisation mécaniques (agitateurs) avant que leur mélange n'atteigne la station float 5 dont seule la toute première partie est représentée.

On décrit ci-après des exemples de fabrication de verres teintés pour l'automobile.

### EXEMPLES

Le dispositif selon l'invention est constitué d'un four principal (également appelé fondoir) équipé de brûleurs atmosphériques transversaux, de surface au sol de 350 m², fonctionnant avec une profondeur de verre fondue de 1,5 m, d'un four auxiliaire à brûleurs immergés et de surface au sol de 3 m², les deux flux de verre étant mélangés dans une cellule de coloration ayant une surface au sol d'environ 24 m² et qui comprend 2 ou plus rangées d'agitateurs dont le diamètre de pales extérieur est de 500 mm.

Le four principal élabore en continu un verre faiblement coloré comprenant 0,6% d'oxyde de fer avec un redox Fe²⁺ de 0,30 à une tirée de 600 tonnes par jour (t/j). Un fonctionnement continu est favorable à la qualité du verre produit et à la durée de vie du four. Pour aboutir à un verre final à 0,85% d'oxyde de fer, on ajoute 30t/j d'un verre auxiliaire contenant 5,85% d'oxyde de fer. Ceci nécessite environ 28 t de calcin par jour, soit une partie seulement du calcin de retour ligne, l'autre partie étant introduite dans le four principal suivant une quantité adaptée à la production du verre à 0,6% d'oxyde de fer. La tirée totale de la ligne est alors de 630t/j : en fusion classique (fusion classique c'est-à-dire avec introduction des colorants en zone d'enfournement) on aurait dû la baisser à environ 560 t/j.

Pour faire une nuance teintée à 1 % en oxyde de fer, on peut porter la tirée du four auxiliaire à environ 46 t/j avec le même taux d'introduction d'oxyde de fer (la surface au sol est alors de 4,5 m² environ), ou porter ce taux à 9% avec la même tirée de 30 t/j. Dans le premier cas la tirée totale atteint 646 t/j alors qu'en fusion classique (un seul four de fusion) elle n'aurait pas dépassé 550t/j.

La transition s'effectue par transition dans le four auxiliaire : le rapport du verre résident sur la tirée est d'environ 7,5t sur 50t/j soit 0,15 jours. La transition (que l'on peut de plus raccourcir par surcoloration) est complète en environ 0,15 x 3 = 0,45 jours. Pendant ce temps le verre du four auxiliaire n'est préférentiellement pas introduit dans le four principal.

La durée de transition sur le four principal en coloration ou décoloration est ainsi de l'ordre d'une demi journée maximum, ce qui bien plus faible que les 3 à 5 jours nécessaires avec une configuration classique, c'est-à-dire un four unique de même tirée totale dont le flux est additionné avant formage en frittes de coloration.

## Revendications

1. Procédé de fabrication d'un verre homogène, comprenant la préparation d'un flux principal d'un verre principal liquide par un dispositif principal comprenant un four principal, la préparation d'un flux auxiliaire d'un verre auxiliaire liquide par un dispositif auxiliaire comprenant un four auxiliaire comprenant au moins un brûleur immergé, le dispositif auxiliaire comprenant un affineur situé après le four auxiliaire, le flux auxiliaire étant plus faible que le flux principal, les deux flux étant ensuite mélangés en un seul flux total du verre final, le verre auxiliaire étant de composition différente de celle du verre principal en ce qui concerne la teneur en au moins un composé conférant un caractère absorbant au verre final.

2. Procédé selon l'une des revendications précédentes **caractérisé en ce que** le flux auxiliaire représente au plus 20% du flux total.

3. Procédé selon l'une des revendications précédentes **caractérisé en ce que** le flux de verre final alimente en continu une station de verre flotté pour être transformé en verre plat.

4. Procédé selon la revendication précédente **caractérisé en ce que** le verre plat a une largeur supérieure à 2 mètres.

5. Procédé selon la revendication précédente **caractérisé en ce que** le verre plat a une largeur supérieure 3 mètres.

6. Procédé selon l'une des revendications précédentes **caractérisé en ce que** le verre principal contient au moins 55% en poids de silice et moins de 5% en poids d'alumine.

7. Procédé selon l'une des revendications précédentes **caractérisé en ce que** le verre auxiliaire est de composition différente de celle du verre principal en ce qui concerne au moins un composé, ledit composé étant présent dans le verre auxiliaire en une teneur allant de 20 ppm en poids à 30% en poids.

8. Procédé selon l'une des revendications précédentes **caractérisé en ce que** le verre auxiliaire est de composition différente de celle du verre principal en ce qui concerne au moins un composé, ledit composé étant un pigment choisi parmi
- un oxyde d'un métal choisi parmi le fer, le chrome, le cobalt, le cuivre, le nickel, le zirconium, le titane, le manganèse, le praséodyme, le zinc, le cérium, le néodyme, l'erbium, le vanadium, le tungstène,
- le sélénium.

9. Procédé selon l'une des revendications précédentes **caractérisé en ce que** le verre auxiliaire est de composition différente de celle du verre principal en ce qui concerne au moins un composé, ledit composé étant un pigment présent dans le verre auxiliaire en une teneur plus importante à la teneur du même pigment dans le verre principal et en une teneur suffisante pour conférer une coloration visible à l'oeil nu au verre final.

10. Procédé selon l'une des revendications précédentes **caractérisé en ce que** le verre auxiliaire est de composition différente de celle du verre principal en ce qui concerne au moins un composé, ledit composé étant de l'oxyde de fer conférant une coloration verte à bleu.

11. Procédé selon l'une des revendications précédentes, **caractérisé en ce que** le four auxiliaire est alimenté par au moins deux des moyens suivants:
- en calcin,
- en composition vitrifiable sous forme de poudre,
- en verre fondu provenant d'un prélèvement effectué en amont sur le flux de verre principal,
- en fritte de coloration.

12. Procédé selon l'une des revendications précédentes **caractérisé en ce qu'**au moment du mélange, le verre auxiliaire et le verre principal ont tous deux une température allant de 1100 à 1200°C.

13. Procédé selon l'une des revendications précédentes, **caractérisé en ce que** le four auxiliaire débarrasse quasi-totalement le verre auxiliaire des sulfates présents dans les matières premières l'alimentant, le verre auxiliaire présentant une teneur en fer plus élevée que celle du verre principal et un redox en Fe²⁺ plus élevé que celui du verre principal.

14. Procédé selon l'une des revendications précédentes, **caractérisé en ce que** le verre auxiliaire présente une teneur quasi-nulle en sulfate, le verre principal présente une teneur en sulfate allant de 0,2 à 0,35 %, exprimé en % en poids de SO₃, le verre auxiliaire présentant un redox en Fe²⁺ plus élevé que le verre principal et une teneur en fer plus élevée que le verre principal.

15. Procédé selon l'une des revendications précédentes, **caractérisé en ce que** le verre auxiliaire contient 0,5 à 20% en poids d'oxyde de fer.

16. Procédé selon l'une des revendications précédentes **caractérisé en ce que** le four principal fonctionne avec une tirée spécifique allant de 1,4 à 2 t/j.m² et une profondeur de verre fondu supérieure à 1 mètre et **en ce que** le four auxiliaire fonctionne avec une tirée spécifique allant de 5 à 20 t/j.m².

17. Procédé selon l'une des revendications précédentes **caractérisé en ce que** le four auxiliaire présente une surface au sol allant de 1 à 50 m² et **en ce que** le four principal présente une surface au sol allant de 200 à 600 m².

18. Procédé de préparation de verres finaux aux caractères absorbants différents, chaque verre final étant préparé par le procédé de l'une des revendications précédentes, le même verre principal étant utilisé pour les verres finaux, la modification du caractère absorbant des verres finaux étant réalisé par la modification des verres auxiliaires.

19. Dispositif de fabrication d'un verre homogène, notamment selon le procédé de l'une des revendications précédentes, comprenant un dispositif principal comprenant un four principal générant un flux principal de verre, un dispositif auxiliaire comprenant un four auxiliaire principalement chauffé par au moins un brûleur immergé, le dispositif auxiliaire comprenant un affineur situé après le four auxiliaire, le dispositif auxiliaire générant un flux auxiliaire d'un verre auxiliaire, les deux flux étant ensuite mélangés en un seul flux total générant le verre final homogène.

20. Dispositif selon la revendication précédente, **caractérisé en ce que** les deux flux sont mélangés par des agitateurs suffisamment puissants pour générer le verre final homogène.

21. Dispositif selon l'une des revendications précédentes de dispositif **caractérisé en ce que** le four principal est principalement chauffé par au moins un brûleur atmosphérique.

22. Dispositif selon l'une des revendications précédentes de dispositif **caractérisé en ce qu'**il comprend après mélange des deux flux, une station de formage en continu de verre plat.

23. Dispositif selon l'une des revendications précédentes de dispositif **caractérisé en ce que** le four auxiliaire présente une surface au sol allant de 1 à 50 m² et **en ce que** le four principal présente une surface au sol allant de 200 à 600 m².

## Claims

1. Process for manufacturing a homogeneous glass, comprising the production of a main stream of a liquid main glass, by a main plant that includes a main furnace, and the production of an auxiliary stream of a liquid auxiliary glass, by an auxiliary plant that includes an auxiliary furnace comprising at least one submerged burner, the auxiliary plant including a refiner located after the auxiliary furnace, the auxiliary stream being smaller than the main stream, the two streams then being mixed to form a single total stream of the final glass, the auxiliary glass having a composition different from that of the main glass as regards the content of at least one compound giving an absorbent nature to the final glass.

2. Process according to one of the preceding claims, **characterized in that** the auxiliary stream represents at most 20% of the total stream.

3. Process according to either of the preceding claims, **characterized in that** the final glass stream continuously feeds a float glass station to be converted into flat glass.

4. Process according to the preceding claim, **characterized in that** the flat glass has a width of greater than 2 meters.

5. Process according to the preceding claim, **characterized in that** the flat glass has a width of greater than 3 meters.

6. Process according to one of the preceding claims, **characterized in that** the main glass contains at least 55% by weight of silica and less than 5% by weight of alumina.

7. Process according to one of the preceding claims, **characterized in that** the auxiliary glass has a composition different from that of the main glass as regards at least one compound, said compound being present in the auxiliary glass with a content ranging from 20 ppm by weight to 30% by weight.

8. Process according to one of the preceding claims, **characterized in that** the auxiliary glass has a composition different from that of the main glass as regards at least one compound, said compound being a pigment chosen from:
- an oxide of a metal chosen from iron, chromium, cobalt, copper, nickel, zirconium, titanium, manganese, praseodymium, zinc, cerium, neodymium, erbium, vanadium, and tungsten;
- selenium.

9. Process according to one of the preceding claims, **characterized in that** the auxiliary glass has a composition different from that of the main glass as regards at least one compound, said compound being a pigment present in the auxiliary glass with a content higher than the content of the same pigment in the main glass and with a content sufficient to give the final glass a colouration visible to the naked eye.

10. Process according to one of the preceding claims, **characterized in that** the auxiliary glass has a composition different from that of the main glass as regards at least one compound, said compound being iron oxide giving a green-to-blue colouration.

11. Process according to one of the preceding claims, **characterized in that** the auxiliary furnace is fed with at least two of the following means:
- cullet;
- a batch composition, in powder form;
- molten glass coming from an upstream tap-off from the main glass stream; and
- a colouring frit.

12. Process according to one of the preceding claims, **characterized in that**, when mixing the auxiliary glass with the main glass, both have a temperature ranging from 1100 to 1200°C.

13. Process according to one of the preceding claims, **characterized in that** the auxiliary furnace strips the auxiliary glass of almost all of the sulfates present in the batch materials feeding it, the auxiliary glass having a higher iron content than that of the main glass and a higher Fe²⁺ redox than that of the main glass.

14. Process according to one of the preceding claims, **characterized in that** the auxiliary glass has an almost zero sulfate content, the main glass has a sulfate content ranging from 0.2 to 0.35%, expressed as % by weight of SO₃, the auxiliary glass having a higher Fe²⁺ redox than the main glass and a higher iron content than the main glass.

15. Process according to one of the preceding claims, **characterized in that** the auxiliary glass contains 0.5 to 20% iron oxide by weight.

16. Process according to one of the preceding claims, **characterized in that** the main furnace operates with a specific pull rate ranging from 1.4 to 2 t/d.m² and a molten glass depth of greater than 1 meter and **in that** the auxiliary furnace operates with a specific pull rate ranging from 5 to 20 t/d.m².

17. Process according to one of the preceding claims, **characterized in that** the auxiliary furnace has a floor area ranging from 1 to 50 m² and **in that** the main furnace has a floor area ranging from 200 to 600 m².

18. Process for producing final glasses having different absorbent characteristics, each final glass being produced by the process of one of the preceding claims, the same main glass being used for the final glasses and the modification of the absorbent nature of the final glasses being carried out by modifying the auxiliary glasses.

19. Plant for manufacturing a homogeneous glass, especially using the process of one of the preceding claims, comprising a main plant which includes a main furnace generating a main stream of glass, and an auxiliary plant, which includes an auxiliary furnace heated mainly by at least one submerged burner, the auxiliary plant including a refiner located after the auxiliary furnace, the auxiliary plant generating an auxiliary stream of an auxiliary glass, the two streams then being mixed to form a single total stream generating the final homogeneous glass.

20. Plant according to the preceding claim, **characterized in that** the two streams are mixed by stirrers that are sufficiently powerful to generate the homogeneous final glass.

21. Plant according to one of the preceding plant claims, **characterized in that** the main furnace is heated mainly by at least one atmospheric burner.

22. Plant according to one of the preceding plant claims, **characterized in that** it includes, after the point where the two streams are mixed, a continuous flat glass forming station.

23. Plant according to one of the preceding plant claims, **characterized in that** the auxiliary furnace has a floor area ranging from 1 to 50 m² and **in that** the main furnace has a floor area ranging from 200 to 600 m².

## Patentansprüche

1. Verfahren zur Herstellung einer homogenen Glasschmelze, das die Erzeugung eines Hauptflusses aus einer Hauptglasschmelze durch eine Haupteinrichtung, die einen Hauptofen umfasst, und die Erzeugung eines Nebenflusses aus einer Nebenglasschmelze durch eine Nebeneinrichtung, die einen Nebenofen umfasst, der mindestens einen Tauchbrenner enthält, umfasst, wobei die Nebeneinrichtung ein Läuterungsabteil umfasst, das sich nach dem Nebenofen befindet, der Nebenfluss kleiner als der Hauptfluss ist, die zwei Flüsse anschließend zu einem einzigen Gesamtfluss aus der fertigen Glasschmelze vermischt werden und die Zusammensetzung der Nebenglasschmelze eine andere als diejenige der Hauptglasschmelze ist, was den Gehalt an mindestens einer Verbindung betrifft, die dem fertigen Glas einen absorbierenden Charakter verleiht.

2. Verfahren nach einem der vorhergehenden Ansprüche, **dadurch gekennzeichnet, dass** der Nebenfluss höchstens 20 % des Gesamtflusses ausmacht.

3. Verfahren nach einem der vorhergehenden Ansprüche, **dadurch gekennzeichnet, dass** der fertige Glasfluss kontinuierlich einer Floatglasanlage zugeführt wird, um in ein Flachglas umgewandelt zu werden.

4. Verfahren nach dem vorhergehenden Anspruch, **dadurch gekennzeichnet, dass** die Breite des Flachglases mehr als 2 Meter beträgt.

5. Verfahren nach dem der vorhergehenden Anspruch, **dadurch gekennzeichnet, dass** die Breite des Flachglases mehr als 3 Meter beträgt.

6. Verfahren nach einem der vorhergehenden Ansprüche, **dadurch gekennzeichnet, dass** die Hauptglasschmelze mindestens 55 Gew.-% Siliciumdioxid und weniger als 5 Gew.-% Aluminiumoxid enthält.

7. Verfahren nach einem der vorhergehenden Ansprüche, **dadurch gekennzeichnet, dass** die Nebenglasschmelze eine andere Zusammensetzung als die Hauptglasschmelze hat, was mindestens eine Verbindung betrifft, wobei diese Verbindung in der Nebenglasschmelze mit einem Gehalt von gewichtsmäßigen 20 ppm bis 30 Gew.-% vorhanden ist.

8. Verfahren nach einem der vorhergehenden Ansprüche, **dadurch gekennzeichnet, dass** die Nebenglasschmelze eine andere Zusammensetzung als die Hauptglasschmelze hat, was mindestens eine Verbindung betrifft, wobei diese Verbindung ein Pigment ist, das aus
- einem Oxid eines Metalls, das aus Eisen, Chrom, Cobalt, Kupfer, Nickel, Zirconium, Titan, Mangan, Praseodym, Zink, Cer, Neodym, Erbium, Vanadium und Wolfram ausgewählt ist, und
- Selen
ausgewählt ist.

9. Verfahren nach einem der vorhergehenden Ansprüche, **dadurch gekennzeichnet, dass** die Nebenglasschmelze eine andere Zusammensetzung als die Hauptglasschmelze hat, was mindestens eine Verbindung betrifft, wobei diese Verbindung ein Pigment ist, das in der Nebenglasschmelze mit einem Gehalt, der größer als der Gehalt desselben Pigments in der Hauptglasschmelze ist, und mit einem Gehalt, der ausreicht, um dem fertigen Glas eine mit dem bloßen Auge sichtbare Färbung zu verleihen, vorliegt.

10. Verfahren nach einem der vorhergehenden Ansprüche, **dadurch gekennzeichnet, dass** die Nebenglasschmelze, eine andere Zusammensetzung als die Hauptglasschmelze hat, was mindestens eine Verbindung betrifft, wobei diese Verbindung Eisenoxid ist, das eine grüne bis blaue Färbung verleiht.

11. Verfahren nach einem der vorhergehenden Ansprüche, **dadurch gekennzeichnet, dass** dem Nebenofen mindestens zwei der folgenden Mittel zugeführt werden:
- Glasbruch,
- pulverförmige Glasrohstoffzusammensetzung,
- Glasschmelze, die aus einer Entnahme stammt, die stromaufwärts aus dem Hauptglasfluss entnommen worden ist, und
- Färbungsfritte.

12. Verfahren nach einem der vorhergehenden Ansprüche, **dadurch gekennzeichnet, dass** zu dem Zeitpunkt des Mischens die Nebenglasschmelze und die Hauptglasschmelze beide eine Temperatur von 1100 bis 1200 °C haben.

13. Verfahren nach einem der vorhergehenden Ansprüche, **dadurch gekennzeichnet, dass** in dem Nebenofen die Nebenglasschmelze von den Sulfaten, die in den ihn versorgenden Glasrohstoffen vorhanden sind, fast vollständig befreit wird, wobei die Nebenglasschmelze einen Eisengehalt, der höher als derjenige der Hauptglasschmelze ist, und einen Fe²⁺-Redoxgrad, der größer als derjenige der Hauptglasschmelze ist, aufweist.

14. Verfahren nach einem der vorhergehenden Ansprüche, **dadurch gekennzeichnet, dass** der Sulfatgehalt der Nebenglasschmelze fast gleich Null und der Sulfatgehalt der Hauptglasschmelze 0,2 bis 0,35 %, angegeben als Gew.-% SO₃, beträgt, und die Nebenglasschmelze einen Fe²⁺-Redoxgrad, der höher als derjenige der Hauptglasschmelze ist, und einen höheren Eisengehalt als die Hauptglasschmelze besitzt.

15. Verfahren nach einem der vorhergehenden Ansprüche, **dadurch gekennzeichnet, dass** die Nebenglasschmelze 0,5 bis 20 Gew.-% Eisenoxid enthält.

16. Verfahren nach einem der vorhergehenden Ansprüche, **dadurch gekennzeichnet, dass** der Hauptofen mit einem spezifischen Ausstoß von 1,4 bis 2 t/d·m² und einer Glasschmelzetiefe von mehr als 1 Meter arbeitet, **und dass** der Nebenofen mit einem spezifischen Ausstoß von 5 bis 20 t/d·m² arbeitet.

17. Verfahren nach einem der vorhergehenden Ansprüche, **dadurch gekennzeichnet, dass** der Nebenofen eine Sohlefläche von 1 bis 50 m² **und dass** der Hauptofen eine Sohlefläche von 200 bis 600 m² aufweist.

18. Verfahren zur Herstellung von fertigen Gläsern mit unterschiedlichem Absorptionscharakter, wobei jedes fertige Glas durch das Verfahren nach einem der vorhergehenden Ansprüche hergestellt, dieselbe Hauptglasschmelze für die fertigen Gläser verwendet und die Modifizierung des absorbierenden Charakters der fertigen Gläser durch Veränderung der Nebenglasschmelzen erreicht wird.

19. Vorrichtung zur Herstellung eines homogenen Glases, insbesondere gemäß dem Verfahren nach einem der vorhergehenden Ansprüche, welche eine Haupteinrichtung, die einen Hauptofen, der einen Hauptglasschmelzestrom erzeugt, umfasst, und eine Nebeneinrichtung, die einen Nebenofen umfasst, der hauptsächlich von mindestens einem Tauchbrenner beheizt wird, umfasst, wobei die Nebeneinrichtung ein Läuterungsabteil umfasst, das sich nach dem Nebenofen befindet, die Nebeneinrichtung einen Nebenfluss aus einer Nebenglasschmelze erzeugt und die beiden Flüsse anschließend zu einem einzigen Gesamtfluss vermischt werden, der das homogene fertige Glas erzeugt.

20. Vorrichtung nach dem vorhergehenden Anspruch, **dadurch gekennzeichnet, dass** die zwei Flüsse von Rührern vermischt werden, die ausreichend leistungsstark sind, um das homogene fertige Glas zu erzeugen.

21. Vorrichtung nach einem der sie betreffenden vorhergehenden Ansprüche, **dadurch gekennzeichnet, dass** der Hauptofen hauptsächlich von mindestens einem Atmosphärenbrenner beheizt wird.

22. Vorrichtung nach einem der sie betreffenden vorhergehenden Ansprüche, **dadurch gekennzeichnet, dass** sie nach dem Vermischen der zwei Flüsse eine Station zur kontinuierlichen Formgebung von Flachglas umfasst.

23. Vorrichtung nach einem der sie betreffenden vorhergehenden Ansprüche, **dadurch gekennzeichnet, dass** der Nebenofen eine Sohlefläche aufweist, die 1 bis 50 m² beträgt, **und dass** der Hauptofen eine Sohlefläche aufweist, die 200 bis 600 m² beträgt.
